Europäisches Patentamt

European Patent Office

Office européen des brevets

(11) Publication number: **0 223 463 B1**

# EUROPEAN PATENT SPECIFICATION

(45) Date of publication of patent specification: **25.11.92** (51) Int. Cl.⁵: **G06F 9/46**

(21) Application number: **86308468.7**

(22) Date of filing: **30.10.86**

(54) **Multiprocessor data processing system.**

(30) Priority: **14.11.85 US 797828**

(43) Date of publication of application:
**27.05.87 Bulletin 87/22**

(45) Publication of the grant of the patent:
**25.11.92 Bulletin 92/48**

(84) Designated Contracting States:
**AT BE CH DE ES FR GB GR IT LI LU NL SE**

(56) References cited:
**EP-A- 0 137 191**
**US-A- 3 530 438**
**US-A- 4 325 120**

**PROCEEDINGS OF THE 1ST INTERNATIONAL
CONFERENCE ON COMPUTER WORKSTA-
TIONS, San Jose, 11th-14th November 1985,
pages 134-143, IEEE, New Yorl, US; E.
BASART: "The ridge operating system: high
performance through message-passing and
virtual memory"**

**"Computer Engineering", C.G. Bell et al.,
Digital Press, 1978, pages
382,422,423,426-428**

(73) Proprietor: **DATA GENERAL CORPORATION
4400 Computer Drive
Westboro Massachusetts 01580(US)**

(72) Inventor: **Kerns, Daniel R.
24 Grove Street
Westboro Massachusetts 01586(US)**
Inventor: **Pilat, John F.
2 Maria Lane
Hopkingon Massachusetts 01748(US)**
Inventor: **Gilgis, John r.
631 Edgebrook Drive
Boylston Massachusetts 01505(US)**
Inventor: **Kirkpatrick, Dana A.
280 Elm Street
Marlboro Massachusetts 01752(US)**

(74) Representative: **Pears, David Ashley et al
REDDIE & GROSE 16 Theobalds Road
London WC1X 8PL(GB)**

## Description

Background of the Invention

This invention relates to a multiple processor data processing system, comprising a plurality of co-equal processors each executing one of a plurality of processing tasks, a common memory the use of which is shared by the plurality of processors, the memory including a data structure having a plurality of state blocks for storing information defining the internal machine states of the processors during the execution of a processing task, each of the state blocks corresponding to one of the plurality of processing tasks; and each of the processors operating in response to instructions of an instruction set. Such a multiple processor data processing system is described in United States Patent US-A-3 530 438.

In a data processing system using multiple processors, each processor can perform at any one time one of a plurality of different processes. The processors may use a shared main memory, and operate on a time-shared basis to execute the plurality of processes.

When a plurality of processes are to be processed by a system which utilizes multiple processors, such systems are often arranged so that a single processor operates as a master processor and all other processors in the system act as slave processors. In such systems appropriate controls are provided in the master processor for assigning the execution of the processes to itself and to selected ones of the slave processors.

In such systems processes which are awaiting execution are assigned in an appropriately designated order to the processors and a processor normally must complete the execution of one process before a subsequent process can be assigned to that processor. Accordingly, each processor normally accepts a new process for execution only when it has completely executed a previous process.

Such systems tend to give rise to inefficiencies particularly where the execution of a process must be interrupted so that another operation may be performed before the process which is being executed can continue its execution. For example, if the execution of a process requires information that is not immediately available in the system's main memory, such process may require the accessing of such information from an input/output device (e.g. a disk or a tape) whose accessing operation may require a relatively long time during which the processor must remain idle. If such interruptions occur often enough there may be relatively long stretches of time in which many of the processors in a multiple processor system will not be operating and the overall efficiency of the system is not as high as it could be.

It is desirable to arrange a multiple processor system so that the idle times for each processor are minimized. In a perfectly operating system, all processors would desirably be executing a process at all times and each processor would thereby have no idle, or non operating, time.

Brief Summary of the Invention

The present invention is characterised in that the instruction set includes a job processor flush instruction; each of the processors, during the execution of a processing task, is responsive to the job processor flush instruction of its instruction set either (a) when the current execution of a processing task by the processor is interrupted so that the processor is not able to continue the current execution for a relatively long time period, or (b) when the processor has been currently executing a processing task for a specified time period; and the job processor flush instruction causes the current internal machine state of the processor at the time the processor responds to the job processor flush instruction to be stored into that state block of the data structure which corresponds to the processing task being currently executed by the processor, so that another processor can continue the execution of the said internal machine state loaded from said state block.

In the invention which is described in more detail below, all of the processors of the system have effectively co-equal status and when a processor which is executing a particular process becomes idle, for whatever reason, it can cease the execution of that process and accept a different process for execution in the meanwhile. The system has the flexibility that a process which is being executed on any one particular processor can be re-assigned so as to be executed on another processor. In this way the operation of all of the processors can be appropriately allocated so that a processor has minimal idle time and is always ready to accept the execution of a different process if the process it is currently executing requires the processor to be idle for any significant length of time.

Further the system is arranged so that a specific process can only be executed on a particular processor for a fixed total time period. When such time period is over, the execution of such process at that stage is stopped and another process which is awaiting execution can be selected to be executed by such processor. In accordance with such operation whenever a process which is being executed by a processor is either being interrupted for a relatively significant time period or is stopped because its allotted time period is over, the full internal state of the processor with respect to such process at the time the processor ceases execution thereof must be appropriately saved and then supplied to another processor (or in some cases the same processor) when that process is selected for completion of its execution by another processor at some later time.

In order to achieve such operation the basic instruction set of the processors must be provided with suitable additional instructions which permit such operations to occur.

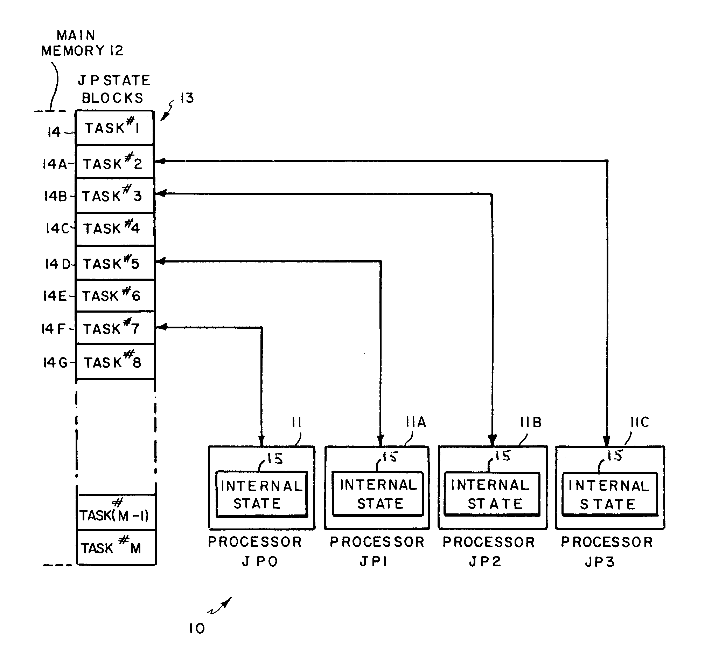

Brief Description of the Drawing

The preferred embodiment of the invention will be described in more detail, by way of example, with reference to the sole figure in the drawing, which is a block diagram of the pertinent part of the preferred multiprocessor data processing system embodying the invention.

Detailed Description of the Preferred Embodiment of the Invention

As can be seen in the simplified block diagram of the sole figure, a system 10 comprises a plurality of processors 11, 11A, 11B, and 11C. While four processors are shown therein, the system is exemplary only and the number of processors can be greater or less than four, as desired. All of the processors utilize a single large main memory 12 (a portion of which is depicted) which is shared by all of the processors. A typical processor is one which is described, for example, in U.S. Patent No. 4,386,399 issued on May 31, 1983 to Edward Rasala et al, incorporated by reference herein. The overall processor described in such patent is essentially of the type which has been made and sold, for example, under the model designation MV/8000 by Data General Corporation of Westboro, Massachusetts. Such processors are well known to the art and have been made, sold, and used by those in the art for many years. Each of such processors has a known instruction set which comprises a plurality of macroinstructions which, when suitably decoded by the operating system software of the system, permit the operations defined by such instructions to be performed by the system. The instruction set thereof is described in the appendices of the above Rasala et al. patent and the operation of the processor in response to each of such instructions would be well known to those in the art.

In order to extend the operation of such a processor to a multiple processor system such as shown in the figure wherein a plurality of such processors are utilized in an overall system with a shared memory, it is necessary to extend the instruction set to include further macroinstructions which will permit the desired multiple processor operation to occur. In order to understand the operation of selecting processes for execution among the multiple processors of the system, as discussed above, it is helpful, to understand the concept of a job processor state block (JP State Block) which can be defined as a data structure in the main memory 12 in which all of the internal logic states of a processor required for the execution of a particular process by a processor at any instant of time can be stored.

The job processor state block data structure 13 is shown in the figure as comprising a plurality of blocks 14, 14A, 14B, ... etc. each state block corresponding to a processing task (job) which is to be executed by a processor. In the example depicted, there may be at any particular time eight tasks to be executed, each of which is assigned one of the JP state blocks 14 through 14G as shown.

Each of the processor's operating state software is used to select one of the processes awaiting execution in accordance with whatever criteria a system designer may elect to utililze for such purpose. A particular operating system program for making such selection could be readily devised by those in the art for such purpose. In accordance with such selection procedure, each of the processors selects one of the processes awaiting execution by a processor. For example, processor JP0 in the figure has selected Task #7, JP1 has selected Task #5, JP2 has selected Task #3 and JP4 has selected Task #2.

When a processor stops the execution of a particular process, all of the necessary internal logic states of the processor at that time (i.e., the internal logic states which would be necessary to permit a processor to resume execution of that process at a later time) are stored in that particular process's JP State Block. For example, if JP1 stops the execution of Task #5, the processor's internal machine state (represented by internal state 15) is copied into job processor state block 14D.

The operation of storing such internal logic state occurs through the use of a special job processor flush instruction defined as a "JP FLUSH" instruction. The processor responds to such instruction by writing into the JP State Block, corresponding to the task it was executing at the time, the appropriate information which defines the internal logic states of the processor which would be required to resume execution of such process at a later time. A JP FLUSH instruction does not change what is in each of the necessary logic elements i.e. the information which is stored in registers, for example, but does place a copy of such information into the appropriate JP State Block.

Such a JP FLUSH instruction may be issued by the processor, for example, under two conditions. In accordance with a first condition, a processor which is executing a particular process reaches a point in such process where the operating system must perform an operation which does not require the processor to continue the execution of the particular process, i.e. the processor's execution must be interrupted. For example, the operating system may be required to perform an input/output (I/O) operation which is sufficiently long in its execution as to leave the processor idle for a relatively lengthy time period. It is desirable that such processor be utilized in an effective manner during such time period, rather than to remain idle by permitting a different process to be executed by the processor during such time period. Accordingly, the processor's operating system issues a JP FLUSH instruction whereupon the complete internal state of the processor, with respect to the process which is currently being executed and is now interrupted, is written into that process's corresponding JP State Block so that the internal state condition of the processor at the time it is interrupted can be saved in the main memory. Such processor can then be made available for the execution of a different process.

In accordance with a second condition the system is arranged so that any particular processor can execute a particular process for only a specified time period. When a processor begins its execution of a particular process, a suitable counter can be initiated for monitoring a selected time period over which the processor is to be used for the execution of such process. When the counter signifies that such time period is over (e.g. the counter may be a down counter which signifies the end of such time period when it reaches zero), the processor system then initiates a JP FLUSH instruction and the processor then becomes available to select a different process for execution.

When the execution of a process has been stopped on a particular processor, that processor's internal state is saved in the JP State Block corresponding to such process via a previously executed JP FLUSH instruction. In order to continue the execution of such process on another (or in some cases the same) processor, the internal state information which has been previously saved must be recovered and loaded into the appropriate locations of the processor which is to continue the execution. The internal machine state of such processor is thereby placed in a condition such that it can continue the execution of such process from the point at which its execution was previously stopped. The loading of the processor with the internal state information from the JP State Block occurs through the initiation by the processor's operating system of a job processor load (JP LOAD) instruction. Such instruction identifies the desired JP State Block for the process the execution of which has been selected to be continued so that the information therein can be accessed and placed in the appropriate locations in the selecting processor.

In some cases the loading of certain registers in a processor may require a significantly long enough time so that it is desirable to avoid the necessity therefor under some conditions, if possible. For example, as discussed in the above referenced Rasala et al. patent, the system defined therein utilizes segment base registers (SBR's). The SBR's of a processor, as discussed in the aforesaid issued patent, are used in forming an address of a page table entry. The address thereof is formed by address fields in a SBR and from address fields in a logical address register. The loading of SBR's from a JP State Block often requires a relatively lengthy time for the management of such loading process. If, for example, a processor has been executing a particular process (task) and such execution is stopped prior to completion of such execution, the processor's operating system may select that same process for continued execution following the issuance of a JP FLUSH instruction. In such a case the selection operation does not change the state of the SBR's in the processor, although the states of other internal machine logic may have been changed. In such case it is possible to perform the loading operation only for internal state information other than SBR information from the corresponding JP State Block and to leave the SBR's of the processor in their current internal machine states, since such states would not have changed. In such a situation it is possible to provide a much faster loading operation. For such purpose, rather than initiating a JP LOAD instruction, the operating system of the processor is arranged to issue a job processor fast load instruction designated as a JPF LOAD instruction.

In accordance with the latter instruction the specified corresponding JP State Block information is loaded into the processor only with respect to information other than the SBR state information therein. Since the SBR's need not be loaded, the time therefor is not required and the loading operation is accelerated by not incurring the overhead of such loading. Such an accelerating instruction then permits even greater efficiency in the overall use of the processors involved.

Another significant instruction required in the multiple processor system illustrated is the initiating or starting instruction for the overall system operation. In a multiple processor system, when the processors are turned on, one of the processors is selected as an initial starting processor so that upon turn-on only the initiating starting processor automatically initiates its own operation, i.e. its operating system performs an appropriate initiation program, while the initiation of other processors is temporarily suspended. The selected processor then issues, in a selected sequence to each of the other processors, a job processor start (JP START) instruction to which instruction each of the other processors responds by then performing its own initiation program.

If a processor (or all processors) is to be shut down, as for diagnostics or "de-bugging" purposes, for example, another instruction required for such purpose is a job processor stop (JP STOP) instruction which is issued in response to an external command for such purpose, e.g. from a console by a user. In accordance therewith, a processor stops its operation and automatically clears its external state by loading its internal machine state into the JP State Block corresponding to the process which it was executing at the time, in the same manner as if a JP FLUSH instruction had been issued. If a command requires the shutting down of the entire system, such operation can be handled in a manner similar to a starting operation wherein a particular processor is selected to be initially stopped and it then issues in a selected sequence, for example, JP STOP instructions to each of the remaining processors which in turn perform a flush operation with respect to the processes being executed thereon at the time.

In order to determine the status of operation of a particular processor as a result of a user's request (command) therefor, a processor's operating system issues a job processor status (JP STATUS) instruction which acts in effect as an inquiry to the processor as to selected information concerning its status. The processor targeted for such a status inquiry need not be stopped in its operation in order to respond to such an instruction. For example, the status inquiry may require the return of several information words concerning the processor, the microcode in the processor, an identification of the JP State Block of the processor, and the identification of the processor itself.

For example, a first return information word could be a length/status word which indicates the size (length) of the JP Status Block and the current processor state. In addition the processor supplies a CPU status word which indicates various modes of operation or states of the CPU for that particular processor. For example, the CPU status word can be used to indicate whether or not the CPU is in an interupt mode, whether the CPU operation is a completely functional, whether it is not functional at all, or whether it is not completely functional but sufficiently functional to be operable (sometimes referred to as a CPU degraded state). Further the status word can indicate whether the processor's microcode control store is loaded and whether or not the CPU is in a "running" mode (i.e., the CPU is in a "program" operating mode and not in a "console" operating mode.) Further the status word can indicate whether the CPU operation has been initiated or not in terms of its start-up operation.

In addition other processor specific information can be provided, e.g., which of the various cache memory units are in operation (the cache units of a typical system such as that example, the instruction processor cache, the system memory cache and the address translation unit cache). A further model/microcode information word can also be supplied by the targeted processor to identify itself as a particular type of processor when various models of similar processors may be being used in the overall multiple processor system. Such word may also indicate, for example, the size of the memory used in such model and whether or not a floating point unit is interfaced with the targeted processor.

A further instruction may be issued, apart from the JP STATUS instruction, merely in order to have a particular processor identify itself. Such a JPID (Job Processor Identity) instruction requires a particular processor to return, in response to such inquiry, an identification number of the processor to which the inquiry has been made, each processor of the system being allocated a unique identification number.

Another instruction to which the processors of a multiple processor system can be arranged to respond is a JPLCS (Job Processor Load Control Store) instruction in which the microcode control store of the targeted processor is loaded. In response to such instruction, the processor operation is stopped so that the control store information can be loaded from an external source, for example.

The use of the above discussed instructions which are added to the basic instruction set of each processor which is to be used in a multiple processor system permits the processors of the system to be very efficiently utlized. Wherever a processor stops the execution of one process it can then select another waiting process for execution from the point at which the waiting process's execution had previously been stopped. To do so it merely loads the internal state which is available in the JP State Block corresponding thereto. Whenever the execution of a process by a processor is stopped, the internal state required to continue execution thereof is placed in the corresponding JP State Block so another processor, for example, can obtain such internal state information to continue such execution. In this way, when multiple processes are to be executed by multiple processors, the various processes can be effectively passed back and forth among the processors so that no processor remains idle for any significant length of time so long as there is a process awaiting to be executed and effectively full utilization of all processors occurs.

**Claims**

1. A multiple processor data processing system, comprising:

a plurality of co-equal processors (11, 11A, 11B, 11C) each executing one of a plurality of processing tasks;

a common memory (12) the use of which is shared by the plurality of processors, the memory including a data structure (13) having a plurality of state blocks (14, 14a) for storing information defining the internal machine states of the processors during the execution of a processing task, each of the state blocks corresponding to one of the plurality of processing tasks; and

each of the processors operating in response to instructions of an instruction set;

characterised in that the instruction set includes a job processor flush instruction;

each of the processors, during the execution of a processing task, is responsive to the job processor flush instruction of its instruction set either (a) when the current execution of a processing task by the processor is interrupted so that the processor is not able to continue the current execution for a relatively long time period, or (b) when the processor has been currently executing a processing task for a specified time period; and

the job processor flush instruction causes the current internal machine state (15) of the processor at the time the processor responds to the job processor flush instruction to be stored into that state block of the data structure which corresponds to the processing task being currently executed by the processor, so that another processor can continue the execution of the said one processing task using said internal machine state loaded from said state block.

2. A system in accordance with claim 1, in which the internal machine state of a processor which has responded to the job processor flush instruction is retained in the processor during the execution of the job processor flush instruction.

3. A system in accordance with claim 1 or 2, in which the instruction set further includes a job processor load instruction, a processor being responsive to the issuance of the job processor load instruction for loading the internal machine state from a state block corresponding to one of the processing tasks into appropriate locations therefor of the processor to permit the processor to continue the execution of the said one processing task using the internal machine state loaded from the state block.

4. A system in accordance with claim 1, 2 or 3, in which the instruction set further includes a job processor fast load instruction, a processor being responsive to the issuance of the job processor fast load instructions to load only a selected part of the internal machine state from the state block corresponding to one of the processing tasks into appropriate locations therefor of the processor, to permit the processor to execute the said one processing task using the selected part of the internal machine state information.

5. A system in accordance with claim 4, in which the processors each include a plurality of segment base registers containing internal machine state information for forming addresses for use in the processors, and in that the selected part of the internal machine state information loaded into the processor does not include machine state information for the segment base registers.

6. A system in accordance with any of claims 1 to 5, in which the instruction set further includes a job processor start instruction, a processor being responsive to a job processor start instruction for initiating the operation of the processor.

7. A system in accordance with claim 6, in which during start-up of the system one of the plurality of processors (11) is used to control the initiation of the operation of all of the processors, and the said one processor is responsive to a job processor start instruction for initiating its own operation and causing the issuance of a job processor start instruction for each of the others of said plurality of processors (11A, 11B, 11C) in sequence so that the initiation of the operation of each of the other processors occurs in sequence.

8. A system in accordance with any of claims 1 to 7, in which the instruction set further includes a job processor stop instruction, a processor being responsive to a job processor stop instruction for shutting down the operation of the processor.

9. A system in accordance with claim 8, in which during shutdown of the system, one (11) of the processors is used to control the shutting down of the operation of all of the processors, the said one processor being responsive to the issuance of a job processor stop instruction for shutting down its own operation and for causing the issuance of a job processor stop instruction for each of the others of the plurality of processors (11A, 11B, 11C) in sequence so that shutting-down of the operation of each of the other processors occurs in sequence.

10. A system in accordance with any of claims 1 to 9, in which the instruction set further includes a job processor status instruction issued in response to a request from a user with respect to the operating state of a selected processor, the selected processor being responsive to the issuance of the job processor status instruction for supplying selected information concerning the operating status of the processor.

11. A system in accordance with claim 10, in which the operating status information includes an identification of the processor and of the state block corresponding to the processing task being executed by the processor.

12. A system in accordance with any of claims 1 to 11, wherein each of the processors has a control store, and the instruction set further includes a job processor load control store instruction, a processor being responsive to the issuance of the job processor load control store instruction for loading control store information into the control store of the processor.

**Patentansprüche**

1. Multiprozessor-Datenverarbeitungssystem, enthaltend: eine Vielzahl untereinander gleicher Prozessoren (11, 11A, 11B, 11C), deren jeder eine von mehreren Bearbeitungsaufgaben ausführt, und einen gemeinsamen Speicher (12), dessen Benutzung auf die Vielzahl der Prozessoren aufgeteilt ist und der eine Datenstruktur (13) mit mehreren Zustandsblöcken (14, 14A) zur Speicherung von Informationen aufweist, die die inneren Maschinenzustände der Prozessoren während der Ausführung der Bearbeitungsaufgaben definieren, wobei jeder der Zustandsblöcke einer der mehreren Bearbeitungsaufgaben entspricht und jeder der Prozessoren in Abhängigkeit von den Befehlen eines Befehlssatzes arbeitet, dadurch gekennzeichnet, daß der Befehlssatz einen Jobprozessor-Überleitungsbefehlenthält, daß jeder der Prozessoren während der Ausführung einer Bearbeitungsaufgabe auf den Jobprozessor-Überleitungsbefehl seines Befehlssatzes anspricht entweder a), wenn die laufende Ausführung einer Bearbeitungsaufgabe durch den Prozessor unterbrochen wird, so daß der Prozessor für eine relativ lange Zeit nicht in der Lage ist, die laufende Bearbeitung fortzusetzen, oder b), wenn der Prozessor für eine bestimmte Zeit laufend eine Bearbeitungsaufgabe ausgeführt hat, und daß der Jobprozessor-Überleitungsbefehl die Einspeicherung des laufenden inneren Maschinenzustandes (15) des Prozessors zu dem Zeitpunkt, zu dem der Prozessor auf den Jobporzessor-Überleitungsbefehl anspricht, in denjenigen Zustandsblock der Datenstruktur veranlaßt, der der vom Prozessor gerade ausgeführten Bearbeitungsaufgabe entspricht, so daß ein anderer Prozessor die Ausführung der Bearbeitungsaufgabe unter Benutzung des aus dem Zustandsblock übernommenen inneren Maschinenzustandes fortsetzen kann.

2. System nach Anspruch 1, dadurch gekennzeichnet, daß der innere Maschinenzustand eines Prozessors, der auf den Jobprozessor-Überleitungsbefehl reagiert hat, im Prozessor während der Ausführung des Jobprozessor-Überleitungsbefehls beibehalten wird.

3. System nach Anspruch 1 oder 2, dadurch gekennzeichnet, daß der Befehlssatz weiterhin einen Jobprozessor-Ladebefehl enthält, wobei ein Prozessor auf die Ausgabe des Jobprozessor-Ladebefehls durch Laden des inneren Maschinenzustandes aus einem Zustandsblock, der einer der Bearbeitungsaufgaben entspricht, in geeignete Bereiche des Prozessors reagiert, um dem Prozessor zu ermöglichen, die Ausführung dieser Bearbeitungsaufgabe unter Benutzung des aus dem Zustandsblock geladenen inneren Maschinenzustandes fortzusetzen.

4. System nach Anspruch 1, 2 oder 3, dadurch gekennzeichnet, daß der Befehlssatz weiterhin einen Jobprozessor-Schnelladebefehl enthält, wobei ein Prozessor auf die Ausgabe des Jobprozessor-Schnelladebefehls durch Laden nur eines bestimmten Teiles des inneren Maschinenzustandes aus dem Zustandsblock, der einer der Bearbeitungsaufgaben entspricht, in geeignete Bereiche des Prozessors reagiert, um dem Prozessor zu ermöglichen, diese Bearbeitungsaufgabe unter Benutzung des bestimmten Teiles der inneren Maschinenzustandsinformation auszuführen.

5. System nach Anspruch 4, dadurch gekennzeichnet, daß jeder der Prozessoren mehrere Segmentbasisregister aufweist, die innere Maschinenzustandsinformationen zur Bildung von Adressen für die Benutzung in den Prozessoren enthalten, und daß der in den Prozessor geladene bestimmte Teil der inneren Maschinenzustandsinformation keine Maschinenzustandsinformation für die Segmentbasisregister enthält.

6. System nach einem der Ansprüche 1 bis 5, dadurch gekennzeichnet, daß der Befehlssatz weiterhin einen Jobprozessor-Startbefehl enthält, wobei ein Prozessor auf den Jobprozessor-Startbefehl durch Starten des Betriebs des Prozessors reagiert.

7. System nach Anspruch 6, dadurch gekennzeichnet, daß während der Inbetriebnahme des Systems einer der Vielzahl der Prozessoren (11) zur Steuerung des Betriebsstarts aller Prozessoren benutzt wird und dieser eine Prozessor auf einen Jobprozessor-Startbefehl mit seinem eigenen Betriebsstart und mit der nacheinander erfolgenden Abgabe eines Jobprozessor-Startbefehls für alle anderen der Vielzahl der Prozessoren (11A, 11B, 11C) anspricht, so daß der Betriebsstart jedes der anderen Prozessoren der Reihe nach erfolgt.

8. System nach einem der Ansprüche 1 bis 7, dadurch gekennzeichnet, daß der Befehlssatz weiterhin einen Jobprozessor-Stopbefehl enthält, wobei ein Prozessor auf einen Jobprozessor-Stopbefehl durch Abbruch seines Betriebs reagiert.

9. System nach Anspruch 8, dadurch gekennzeichnet, daß beim Abbruch des Systems einer der Prozessoren (11) zur Steuerung des Abschaltens aller Prozessoren benutzt wird und dieser eine Prozessor auf die Abgabe eines Jobprozessor-Stopbefehls durch Abbruch seines eigenen Betriebs und der nacheinander erfolgenden Abgabe eines Jobprozessor-Stopbefehls für alle anderen der Vielzahl der Prozessoren (11A, 11B, 11C) anspricht, so daß das Abschalten der Arbeit der anderen Prozessoren der Reihe nach erfolgt.

10. System nach einem der Ansprüche 1 bis 9, dadurch gekennzeichnet, daß der Befehlssatz weiterhin einen Jobprozessor-Statusbefehl enthält, der auf Anforderung eines Nutzers bezüglich des Betriebsstatus eines bestimmten Prozessors ausgegeben wird, wobei der bestimmte Prozessor auf die Abgabe des Jobprozessor-Statusbefehls durch Lieferung einer bestimmten, den Betriebsstatus des Prozessors betreffenden Information reagiert.

11. System nach Anspruch 10, dadurch gekennzeichnet, daß die Information über den Betriebsstatus eine Identifikation des Prozessors und desjenigen Zustandsblocks enthält, der der vom Prozessor ausgeführten Bearbeitungsaufgabe entspricht.

12. System nach einem der Ansprüche 1 bis 11, dadurch gekennzeichnet, daß jeder der Prozessoren einen Steuerspeicher aufweist und der Befehlssatz weiterhin einen Jobprozessor-Steuerspeicherladebefehl enthält, wobei ein Prozessor auf die Ausgabe des Jobprozessor-Steuerspeicherladebefehls durch Laden von Steuerspeicherinformationen in den Steuerspeicher des Prozessors reagiert.

**Revendications**

1. Un système de traitement de données à processeurs multiples comprenant :

une série de processeurs coégaux (11, 11A, 11B, 11C) exécutant chacun une première tâche de traitement parmi une série de tâches de traitement,

un mémoire commune (12) dont l'utilisation est partagée par la série de processeurs, la mémoire incluant une structure (13) de données comprenant une série de blocs d'état (14, 14a) prévue pour mémoriser une information définissant les états internes de machine des processeurs pendant l'exécution d'une tâche de traitement, chacun des blocs d'état correspondant à l'une des tâches de la série de tâches de traitement; et

chacun des processeurs fonctionnant en réponse à des instructions incluses dans un jeu d'instructions;

caractérisé en ce que le jeu d'instructions inclut une instruction de purge du processeur d'exploitation;

chacun des processeurs est sensible, pendant l'exécution d'une tâche de traitement, à l'instruction de purge du processeur d'exploitation incluse dans son jeu d'instructions soit (a) lorsque l'exécution actuelle d'une tâche de traitement par le processeur est interrompue de sorte que le processeur ne peut continuer l'exécution actuelle pendant un laps de temps relativement long, ou (b) lorsque le processeur est en train d'exécuter une tâche de traitement depuis un laps de temps spécifié; et

l'instruction de purge du processeur d'exploitation amène l'état actuel (15) interne de machine du processeur, à l'instant où le processeur répond à l'instruction de purge de processeur d'exploitation, à être mémorisé dans le bloc d'état de la structure de données qui correspond à la tâche de traitement actuellement en cours d'exécution par le processeur, de sorte qu'un autre processeur peut poursuivre l'exécution de ladite première tâche de traitement en utilisant ledit état de machine interne chargé à partir dudit bloc d'état.

2. Un système selon la revendication 1, dans lequel l'état de machine interne d'un processeur qui a répondu à l'instruction de purge de processeur d'exploitation est retenu dans le processeur pendant l'exécution de l'instruction de purge de processeur d'exploitation.

3. Un système selon la revendication 1 ou 2, dans lequel le jeu d'instructions inclut en outre une instruction de chargement de processeur d'exploitation, un processeur étant sensible à l'émission de l'instruction de chargement de processeur d'exploitation pour charger, dans des emplacements du processeur qui sont appropriés à cet effet, l'état de machine interne provenant d'un bloc d'état correspondant à l'une des tâches de traitement afin de permettre au processeur de poursuivre l'exécution de ladite première tâche de traitement en utilisant l'état de machine interne chargé depuis le bloc d'état.

4. Un système selon la revendication 1, 2 ou 3, dans lequel le jeu d'instructions inclut en outre une instruction de chargement rapide de processeur d'exploitation, un processeur étant sensible à l'émission des instructions de chargement rapide de processeur d'exploitation pour ne charger, dans des emplacements du processeur appropriés à cet effet, qu'une partie choisie de l'état de machine interne à partir du bloc d'état correspondant à l'une des tâches de traitement afin de permettre au processeur d'exécuter ladite première tâche de traitement en utilisant la partie choisie de l'information d'état de machine interne.

5. Un système selon la revendication 4, dans lequel les processeurs comprennent chacun une série de registres de base segmentaires contenant une information d'état de machine interne afin de former des adresses à utiliser dans les processeurs, et en ce que la partie choisie de l'information d'état de machine interne chargée dans le processeur n'inclut pas d'information d'état de machine pour les registres de base segmentaires.

6. Un système selon l'une quelconque des revendications 1 à 5, dans lequel le jeu d'instructions inclut en outre une instruction de lancement de processeur d'exploitation, un processeur étant sensible à une instruction de lancement de processeur d'exploitation pour lancer le fonctionnement du processeur.

7. Un système selon la revendication 6 dans lequel un premier processeur (11) de la série de processeurs est utilisé, pendant le lancement, pour commander le lancement du fonctionnement de tous les processeurs, et ledit premier processeur est sensible à une instruction de lancement de processeur d'exploitation pour lancer son propre fonctionnement et provoquer l'émission en séquence d'une instruction de lancement de processeur d'exploitation vers chacun des autres processeurs (11A, 11B, 11C) de ladite série de sorte que le lancement du fonctionnement de chacun des autres processeurs s'effectue en séquence.

8. Un système selon l'une quelconque des revendications 1 à 7, dans lequel le jeu d'instructions inclut en outre une instruction d'arrêt de processeur d'exploitation, un processeur étant sensible à une instruction d'arrêt de processeur d'exploitation pour arrêter le fonctionnement du processeur.

9. Un système selon la revendication 8, dans lequel un premier (11) des processeurs est utilisé, lorsque l'on arrête le système, pour commander l'arrêt du fonctionnement de tous les processeurs, ledit premier processeur étant sensible à l'émission d'une instruction d'arrêt de processeur d'exploitation pour arrêter son propre fonctionnement et pour provoquer l'émission en séquence d'une instruction d'arrêt de processeur d'exploitation à chacun des autres processeurs de la série (11A, 11B, 11C) de sorte que l'arrêt du fonctionnement de chacun des autres processeurs s'effectue en séquence.

10. Un système selon l'une quelconque des revendications 1 à 9, dans lequel le jeu d'instructions inclut en outre une instruction de statut de processeur d'exploitation émise en réponse à une demande d'un utilisateur concernant l'état de fonctionnement d'un processeur choisi, le processeur choisi étant sensible à l'émission de l'instruction de statut de processeur d'exploitation pour fournir l'information choisie concernant le statut de fonctionnement du processeur.

11. Un système selon la revendication 10, dans lequel l'information de statut de fonctionnement inclut une identification du processeur et du bloc d'état correspondant à la tâche de traitement en cours d'exécution par le processeur.

12. Un système selon l'une quelconque des revendications 1 à 11, dans lequel chacun des processeurs comprend une mémoire de commande, et le jeu d'instructions inclut en outre une instruction de mémorisation de commande de charge de processeur d'exploitation, un processeur étant sensible à l'émission de l'instruction de mémorisation de commande de charge de processeur d'exploitation pour charger dans la mémoire de commande du processeur une information de mémoire de commande de chargement.

MAIN
MEMORY 12

JP STATE
BLOCKS

13

14 — TASK #1

14A — TASK #2

14B — TASK #3

14C — TASK #4

14D — TASK #5

14E — TASK #6

14F — TASK #7

14G — TASK #8

TASK(M-1) #

TASK #M

11

15

INTERNAL
STATE

PROCESSOR
JP0

11A

15

INTERNAL
STATE

PROCESSOR
JP1

11B

15

INTERNAL
STATE

PROCESSOR
JP2

11C

15

INTERNAL
STATE

PROCESSOR
JP3

10